# EUROPEAN PATENT APPLICATION

(11) **EP 3 505 864 A1**
(43) Date of publication of application: **03.07.2019**
(21) Application number: 17210760.9
(22) Date of filing: 27.12.2017
(51) Int. Cl.: G01B 11/28

(54) **MEASUREMENT DEVICE AND MEASUREMENT METHOD TO DETERMINE THE SCREEN/CASE RATIO OF A DISPLAY DEVICE**

(71) Applicant: Vestel Elektronik Sanayi ve Ticaret A.S., 45030 Manisa (TR)
(72) Inventor: DÖNER, Cagdas, 45030 Manisa (TR)
(74) Representative: Ascherl, Andreas

(57) **Abstract**

The present invention provides a measurement device (100, 200, 300, 400) for measuring the screen/case ratio (106, 406) of a display device (150, 250, 450), the measurement device (100, 200, 300, 400) comprising a first sensor (101) configured to measure a screen size (103) of a screen (151, 251, 451) of the display device (150, 250, 450), a second sensor (102) configured to measure a size (104) of the case (152, 252, 452) of the display device (150, 250, 450), and a control unit (105, 405) configured to calculate the screen/case ratio (106, 406) as a ratio between the measured screen size (103) and the measured size (104) of the case (152, 252, 452). Further, the present invention provides a respective measurement method.

## Description

### TECHNICAL FIELD

The invention relates to a measurement device for measuring the screen/case ratio of a display device. Further, the present invention relates to a respective measurement method.

### BACKGROUND

Although applicable to any display device, the present invention will mainly be described in conjunction with mobile display devices, like e.g. smartphones.

Smartphones are handheld personal computers with a mobile operating system and an integrated mobile broadband cellular network connection for voice, SMS, and Internet data communication. Most smartphones also support Wi-Fi communication and Bluetooth communication. Smartphones are typically pocket-sized, as opposed to tablets, which are much larger. They are able to run a variety of third-party software components ("apps") that may be installed via respective App stores, and can receive bug fixes and gain additional functionality through operating system software updates. Modern smartphones have a touchscreen colour display with a graphical user interface that covers the front surface and e.g. enables the user to use a virtual keyboard to type and press onscreen icons to activate application features.

A touchscreen is an input and output device normally layered on the top of an electronic visual display of an information processing system, like a smartphone. A user can give input or control the information processing system through simple or multi-touch gestures by touching the screen with a special stylus or one or more fingers. The user can use the touchscreen to react to what is displayed and, if the software allows, to control how it is displayed; for example, zooming to increase the text size. The touchscreen enables the user to interact directly with what is displayed, rather than using a mouse, touchpad, or other such devices.

In mobile devices with larger screens, especially on tablets and mobile phones, a higher screen/case ratio is beneficial to receive better shaped and sized device and maximize the information density on the display. Today one of the most efficient mobile phone screen/case ratios is around 80% on 5.5 inches mobile phones. This ratio provides a very efficient screen usage and allows building light and small devices as compared to other 5.5 inch devices.

Accordingly, there is a need for quickly determining a screen/case ratio of mobile devices.

### SUMMARY OF THE INVENTION

The present invention provides a measurement device with the features of claim 1 and a measurement method with the features of claim 11.

Accordingly, it is provided:
A measurement device for measuring the screen/case ratio of a display device, the measurement device comprising a first sensor configured to measure a screen size of a screen of the display device, a second sensor configured to measure a size of the case of the display device, and a control unit configured to calculate the screen/case ratio as a ratio between the measured screen size and the measured size of the case.

Further, it is provided:
A measurement method for measuring the screen/case ratio of a display device, the measurement method comprising measuring a screen size of a screen of the display device, measuring a size of the case of the display device, and calculating the screen/case ratio as a ratio between the measured screen size and the measured size of the case.

The present invention is based on the finding that it is beneficial to know the screen/case ratio of a display device, e.g. a smartphone or tablet computer.

This knowledge may e.g. be used during development of a display device, like a smartphone, when analyzing competitor's devices. Knowing the screen/case ratio is also an important fact when writing device reviews e.g. for a technical news magazine or an online review.

The present invention therefore provides the measurement device that allows automatically determining the screen/case ratio of a display device. To this end, the measurement device comprises two sensors.

The first sensor measures the screen size of the display device. The second sensor measures the size of the case of the display device. With the information from both sensors, the control may unit may calculate the screen/case ratio by dividing the measured screen size by the measured size of the case.

If for example the screen size is 80 cm² and the case size is 100 cm², then the screen/case ratio will be 80/100=0,8 or 80%.

It is understood, that the display device may be any type of display device or device that comprises a display. The display device may therefore e.g. be a smartphone, a tablet pc, a TV set, an all-in-one PC, a handheld console or the like.

The first sensor, the second sensor and the control unit may e.g. be integrated into a housing as a single device. As alternative, the first sensor, the second sensor and the control unit may also be distributed over more than one housing. The first sensor and the second sensor may for example be integrated into a single housing and the control unit may be provided externally.

Further embodiments of the present invention are subject of the further subclaims and of the following description, referring to the drawings.

In an embodiment, the first sensor may be configured to measure the screen size in a plan view onto the display device, and the second sensor may be configured to measure the size of the case in a plan view onto the display device.

In order to correctly determine the screen size and the size of the case, it is necessary to determine the respective sizes in a top or plane view without any distortions.

The measurement device may therefore e.g. comprise a mechanical arrangement that holds the display device and that places the first sensor and the second sensor over the display device accordingly.

In another embodiment, the first sensor may comprise a plurality of optical sensor elements that are distributed on a plane and are configured to sense incident light. Further, the first sensor may be arranged opposite to the display device such that the plane is parallel to the screen of the display device.

The optical sensor elements may e.g. comprise photo-resistors with a brightness depending resistance value. The amount of incident light may therefore be determined e.g. by measuring a voltage drop over the single photo-resistor elements or a current through the single photo-resistor elements.

The plane may e.g. be provided by a carrier substrate that accommodates the photo-resistor elements in a matrix-like arrangement, i.e. arranged in rows and columns. It is understood, that the measurement resolution will be determined by the size of the photo-resistor elements and the distance between the photo-resistor elements.

During operation of the display device, the screen of the display device will usually be lit up by the backlight of the display device. In contrast, the case will not comprise a backlight and will usually be made of a solid material, like e.g. plastic. Therefore, the optical sensor elements that are placed over the screen will receive incident light from the screen, while the optical sensors placed over the case will not receive any incident light.

The control unit may therefore determine the size of the screen by analyzing which of the optical sensor elements receive incident light an which of the optical elements do not receive incident light. With the knowledge of the size and position of the optical sensor elements and the distance between the optical sensor elements, the control unit may calculate the respective screen size.

It is understood, that the control unit may e.g. permanently analyze the signals from the optical sensor elements. This means that while the measurement device is not placed over or on a display device, the control unit will output invalid results. However, as soon as the measurement device is placed on a display device, the control unit will provide the correct results.

It is also possible that a user input is provided that triggers a measurement by the control unit.

In a further embodiment, the optical sensor elements may be distributed over an area that is at least as large as the largest display device to be analyzed with the measurement device.

The area over which the optical sensor elements are distributed may be chosen as large as, or larger than the largest display device that is to be analyzed. This allows using the measurement device for any type of display device that is smaller than this maximum size. The measurement device may e.g. be adapted to measure display devices up to 20" screen size. Therefore, the area for the optical sensor elements will be slightly larger than a 20" screen, such that the case may also be covered.

In an embodiment, the second sensor may comprise a plurality of proximity sensors.

The proximity sensors will detect when an object comes near the single proximity sensors. The control unit may therefore analyze the signals from the proximity sensors to detect when the measurement device is positioned on or over a display device. The proximity sensors may therefore be used by the control unit to trigger a measurement.

In addition, the control unit may determine the size of the case with the help of the proximity sensors. The proximity sensors will provide a very low distance value where the proximity sensors lay on the display device. In contrast, the proximity sensors will provide a higher value, where the proximity sensors lay besides the display device. The provided values will represent approximately the thickness of the display device or the distance of the proximity sensor to the surface on which the display device is placed.

The control unit may then determine the surface area that is covered by proximity sensors that sense a very low distance to determine the total size of the case of the display device. With the knowledge of the size and position of the optical sensor elements and the distance between the optical sensor elements, the control unit may calculate the respective size of the case.

In another embodiment, the second sensor may be implemented in the control unit that may be configured to identify the screen based on optical sensor elements that indicate a high amount of incident light and to identify the case based on optical sensor elements that indicate a low amount of incident light.

As indicated above, the optical sensor elements that are placed over the screen will receive incident light from the screen and the optical sensor elements that are placed over the housing will not receive the incident light from the screen. In addition, those optical sensor elements that are placed outside or besides the case of the display device will receive at least the surrounding or ambient light as incident light.

The second sensor may therefore be implemented as part of the first sensor and a function in the control unit. The control unit may for example determine which optical sensor elements receive incident light and form a closed surface. These optical sensor elements will probably be the optical sensor elements over the screen. Then the control unit may search for optical sensor elements that receive no or only little incident light and that surround the first group of optical sensor elements. These optical sensor elements will be the optical sensor elements over the case. Further optical sensor elements that surround the second group of optical sensor elements are the sensor elements that are besides the display device.

In a further embodiment, a camera may be provided as the first sensor and the second sensor, wherein the control unit may be configured to determine the screen size of the screen of the display device and the size of the case of the display device using image processing and/or pattern recognition algorithms.

A camera may record images or a video of the display device. An image or multiple images may then be used by the control unit to determine the screen/case ratio for the display device.

Usually, the screen of the display device will be square or rectangular shaped. The control unit may e.g. use pattern recognition algorithms to detect the square shaped or rectangular screen of the display device. Further, the control unit may also use the pattern recognition algorithms to detect the frame or case that surrounds the screen.

The measurement device may be calibrated regarding the distance between the camera and the display device such that the control unit may determine the absolute size of the screen and the case.

However, since the screen/case ratio does not depend on the absolute size but is only a ratio, the control unit may calculate the screen/case ratio without knowing the absolute size of the screen and the case.

In another embodiment, the control unit may be configured to apply perspective corrections to the images recorded by the camera prior to applying the image processing and/or pattern recognition algorithms.

If the camera is not placed exactly in the center over the display device, the recorded images may be distorted according to the perspective that the camera has over the display device. To allow exactly determining the screen size of the screen and the size of the case, the control unit may therefore apply perspective corrections.

The control unit may perform these corrections automatically. To this end, the control unit may e.g. identify the distorted screen, e.g. by looking for a trapezoid in the image. After identifying the trapezoid, the control unit may determine the amount of distortion and correct the distortion. It is understood, that the control unit may also perform other corrections, like e.g. rotations and the like.

In an embodiment, the measurement device may comprise a device support that is arranged under the display device and comprises a predetermined color.

The device support may be arranged to hold the display device in position. However, the device support may also be a simple surface of a predetermined color. It is understood, that the device support's surface is larger than the display device and therefore may be visible when looking onto the display device in a top view.

It is understood, that the predetermined color may be generated by a coating or painting of the surface of the device support. As alternative, the device support may itself comprise an active display or a color backlight with a configurable color.

The predetermined color may be chosen such that the first sensor and the second sensor may distinguish between the screen, the case and the device support surface. For example, if the first sensor comprises optical sensor elements, the device support may provide enough incident light to the optical sensor elements that lay outside of the case of the display device, that they provide a distinctive signal to the control unit.

In case of a camera as first sensor and second sensor, the control unit may be configured to identify the outer edges or the circumference of the display device based on the predetermined color of the device support.

It is further understood, that especially with a camera as first sensor and second sensor, the surface of the device support may also comprise marks, like e.g. dots, crosses or a grid, that help the control unit identify the position and or distortion of the images taken by the camera.

In a further embodiment, the control unit may be coupled to the display device and may be configured to control the display device to display a predetermined pattern on the screen.

The control unit may e.g. be coupled via a cable or wirelessly to the display device. The control unit may e.g. be coupled to a debug port, to a serial port, to a USB port or the like of the display device, or may be coupled to the display device via Bluetooth, WiFi or the like. The control unit may e.g. be supplemented by an application that is running on the display device and that receives control signals from the control unit. This allows measuring any display device that supports the respective application without the need to adapt the measurement device to specific debug port standards. If the first sensor and the second sensor are wirelessly coupled to the control unit, the control unit may e.g. be implemented in said application on the display device.

The predetermined pattern may be any type of pattern or even a solid one color surface.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a measurement device according to the present invention;
Fig. 2 shows a block diagram of another embodiment of a measurement device according to the present invention;
Fig. 3 shows a block diagram of another embodiment of a measurement device according to the present invention;
Fig. 4 shows a block diagram of another embodiment of a measurement device according to the present invention; and
Fig. 5 shows a flow diagram of an embodiment of a measurement method according to the present invention.

In the figures like reference signs denote like elements unless stated otherwise.

### DETAILED DESCRIPTION OF THE DRAWINGS

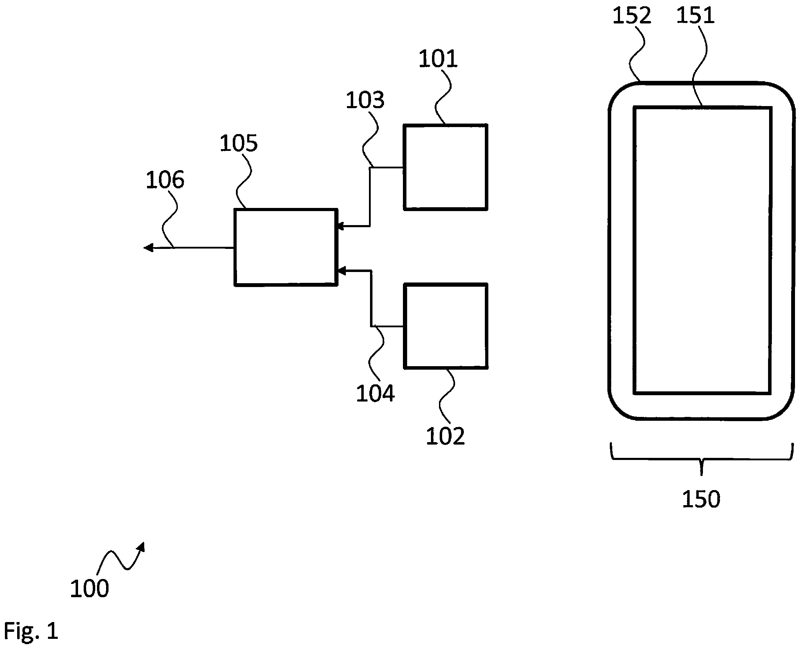

Fig. 1 shows a block diagram of a measurement device 100. The measurement device 100 serves for measuring the screen/case ratio 106 of the display device 150. To this end, the measurement device 100 comprises a first sensor 101 and a second sensor 102, which are both coupled to a control unit 105.

The first sensor 101 measures a screen size 103 of a screen 151 of the display device 150. The second sensor 102 measures a size 104 of the case 152 of the display device 150. And the control unit 105 calculates the screen/case ratio 106 as a ratio between the measured screen size 103 and the measured size 104 of the case 152.

It is understood, that the first sensor 101 may be any type of sensor that is capable of determining the size 103 of the screen 151. Optical sensors may e.g. be used for determining the size 103 of the screen 151. The same applies to the second sensor 102 that determines the size 104 of the case 152. Further, a single sensor element may be used that implements the function of the first sensor 101 and the second sensor 102.

The control unit 105 will use the measured screen size 103 and the size 104 of the case 152 and calculate the ratio between the measured screen size 103 and the size 104 of the case 152 as the screen/case ratio 106.

The measurement device 100 may e.g. comprise a display that is controlled by the control unit 105 and displays the calculated screen/case ratio 106.

Although not explicitly shown, it is understood, that the control unit 105 may be coupled to the display device 150 to provide control signals to the display device 150. The control unit 105 may e.g. control the display device 150 to display specific colors or patterns on the screen 151.

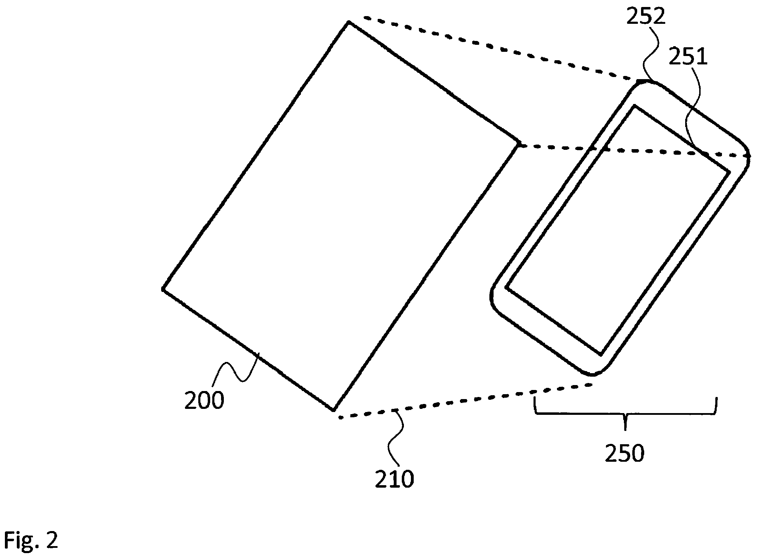

Fig. 2 shows a block diagram of a measurement device 200. The measurement device 200 is shown in a perspective view positioned over the display device 250. Depending on the type of first and second sensor that is used in the measurement device 200, the measurement device 200 may be held over the display device 250 at a distance 210 or may be laid on top of the display device 250, i.e. with a distance 210 of zero.

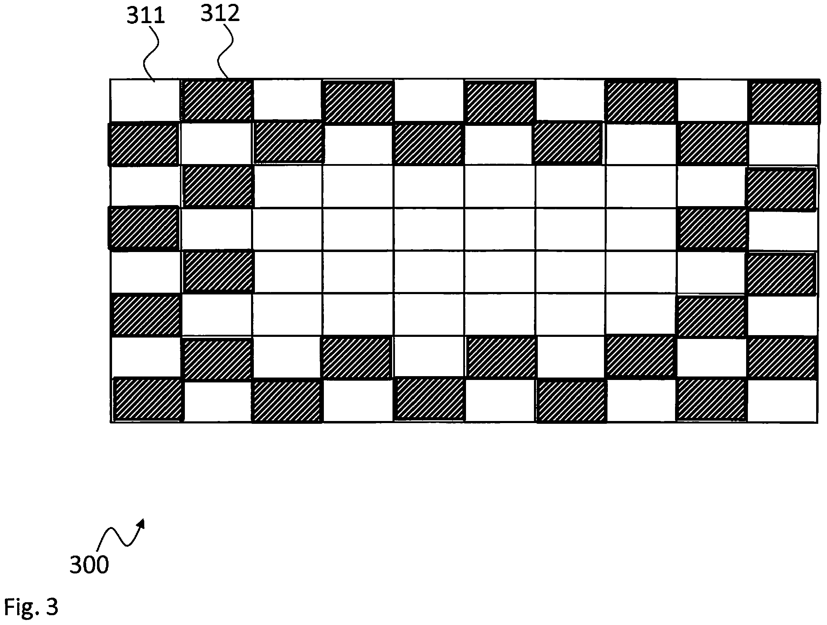

Fig. 3 shows a block diagram of a measurement device 300. In Fig. 3 the measurement device 300 comprises optical sensor elements 311 as first sensor and proximity sensors 312 as second sensor.

The optical sensor elements 311 and the proximity sensors 312 are arranged in an interlaced or matrix fashion, wherein the proximity sensors 312 are mainly arranged at the outer circumference of the measurement device 300. Since the case of the display device will usually be at the outer circumference and the proximity sensors 312 are used to measure the size of the case, providing the proximity sensors 312 at the outer circumference of the measurement device 300 will suffice to detect the case.

It is understood, that the proximity sensors 312 may also be provided on the whole of the surface of the measurement device 300 interlaced with the optical sensor elements 311. It is further understood, that the number of optical sensor elements 311 and proximity sensors 312 may differ from the shown arrangement, and that the pattern for interlacing the optical sensor elements 311 and the proximity sensors 312 may differ from the shown arrangement.

The process of measuring the screen/case ratio of the display device may e.g. involve placing the measurement device 300 on the display device. At the same time the measurement device 300 may be coupled to the display device to provide the display device with control signals. The measurement device 300 may e.g. enable the backlight of the screen of the display device.

The optical sensor elements 311 will then sense the lit-up screen of the display device. The proximity sensors 312 will sense the dimensions or size of the case of the display device. The proximity sensors 312 will sense a very low distance where they lay over the case or the screen. In contrast, the proximity sensors 312 will sense a higher distance where they are outside of the surface of the display device. The sensed distance for these proximity sensors 312 will be the distance to the surface on which the display device is placed for measurement.

The control unit may then calculate the size of the screen based on the information from the optical sensor elements 311 and the size of the case based on the information from the proximity sensors 312.

As an alternative to the measurement device 300 another embodiment of the measurement device may e.g. only comprise optical sensor elements 311. The control unit may then determine the size of the case of the display device based on the measured brightness values.

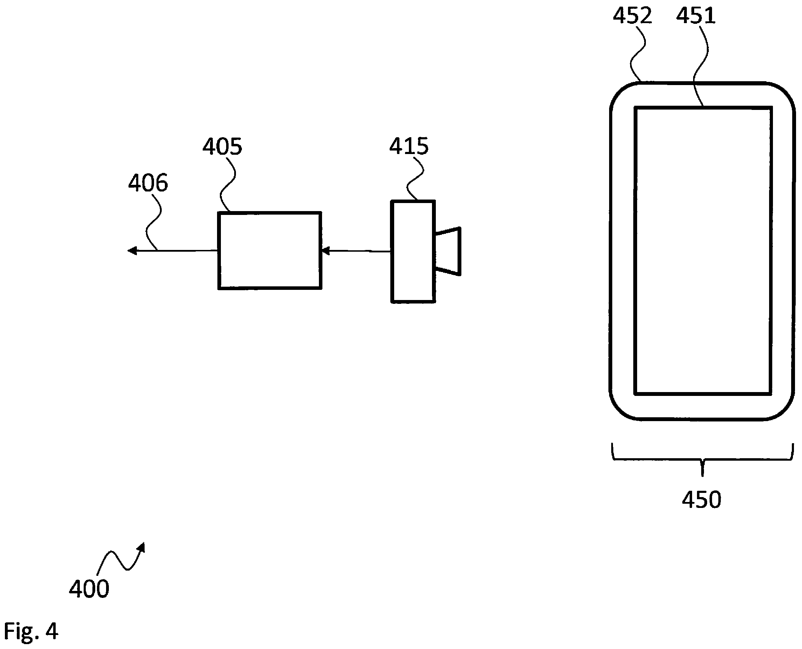

Fig. 4 shows a block diagram of a measurement device 400. The measurement device 400 instead of the sensor elements shown in Fig. 3 uses a camera 415 to determine the screen/case ratio 406 for the display device 450.

The camera 415 provides camera images to the control unit 405. The camera 415 therefore implements the first sensor 101 and the second sensor 102. The control unit 405 may determine the screen size of the screen 451 of the display device 450 and the size of the case 452 of the display device 450 using image processing and/or pattern recognition algorithms.

The control unit 405 may also apply perspective corrections to the images recorded by the camera 415 prior to applying the image processing and/or pattern recognition algorithms.

Although not explicitly shown in Figs. 1 - 4, the measurement device 150, 250, 450 may comprise a device support that may be arranged under the display device 150, 250, 450 and comprises a predetermined color. Further, the control unit 105, 405 may be coupled to the display device 150, 250, 450 and may control the display device 150, 250, 450 to display a predetermined pattern or color on the screen 151, 251,451.

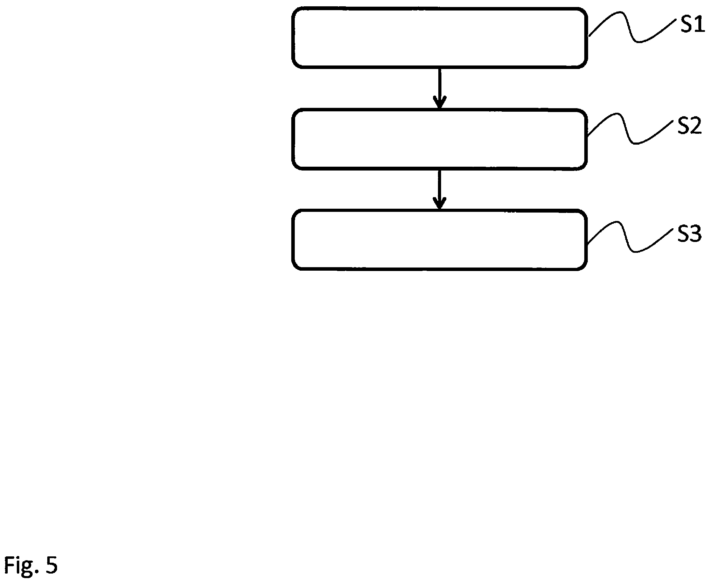

For sake of clarity in the following description of the method based Fig. 5 the reference signs used above in the description of apparatus based Figs. 1 - 4 will be maintained.

Fig. 5 shows a flow diagram of a measurement method for measuring the screen/case ratio 106, 406 of a display device 150, 250, 450.

The measurement method comprises measuring S1 a screen size 103 of a screen 151, 251, 451 of the display device 150, 250, 450, measuring S2 a size 104 of the case 152, 252, 452 of the display device 150, 250, 450, and calculating S3 the screen/case ratio 106, 406 as a ratio between the measured screen size 103 and the measured size 104 of the case 152, 252, 452.

The method may further comprise supporting the display device 150, 250, 450 with a device support that comprises a predetermined color. Further, the method may comprise controlling the display device 150, 250, 450 to display a predetermined pattern on the screen 151, 251, 451.

Measuring S1 the screen size 103 may comprise measuring the screen size 103 in a plan view onto the display device 150, 250, 450, and measuring S2 the size 104 of the case 152, 252, 452 may comprise measuring the size 104 of the case 152, 252, 452 in a plan view onto the display device 150, 250, 450.

In addition, measuring S1 the screen size 103 may be performed with a plurality of optical sensor elements 311 that are distributed on a plane and are configured to sense incident light. The optical sensor elements 311 may e.g. be arranged opposite to the display device 150, 250, 450 such that the plane is parallel to the screen 151, 251, 451 of the display device 150, 250, 450. Further, the optical sensor elements 311 may be distributed over an area that is at least as large as the largest display device 150, 250, 450 to be analyzed with the measurement device 100, 200, 300, 400.

Measuring S2 the size 104 of the case 152, 252, 452 may be performed with a plurality of proximity sensors 312. As alternative, measuring S2 the size 104 of the case 152, 252, 452 may be performed by identifying the screen 151, 251, 451 based on optical sensor elements 311 that indicate a high amount of incident light and by identifying the case 152, 252, 452 based on optical sensor elements 311 that indicate a low amount of incident light.

As alternative, measuring S1 the screen size 103 and measuring the size 104 of the case 152, 252, 452 may be performed with a single camera 415. The screen size 103 of the screen 151, 251, 451 of the display device 150, 250, 450 and the size 104 of the case 152, 252, 452 of the display device 150, 250, 450 may e.g. be determined using image processing and/or pattern recognition algorithms. Further, perspective corrections are applied to the images recorded by the camera 415 prior to applying the image processing and/or pattern recognition algorithms.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides a measurement device 100, 200, 300, 400 for measuring the screen/case ratio 106, 406 of a display device 150, 250, 450, the measurement device 100, 200, 300, 400 comprising a first sensor 101 configured to measure a screen size 103 of a screen 151, 251, 451 of the display device 150, 250, 450, a second sensor 102 configured to measure a size 104 of the case 152, 252, 452 of the display device 150, 250, 450, and a control unit 105, 405 configured to calculate the screen/case ratio 106, 406 as a ratio between the measured screen size 103 and the measured size 104 of the case 152, 252, 452. Further, the present invention provides a respective measurement method.

### List of reference signs

- 100, 200, 300, 400: measurement device
- 101: first sensor
- 102: second sensor
- 103: screen size
- 104: size of the case
- 105, 405: control unit
- 106, 406: screen/case ratio

- 210: distance

- 311: optical sensor element
- 312: proximity sensor

- 415: camera

- 150, 250, 450: display device
- 151, 251, 451: screen
- 152, 252, 452: case

- S1, S2, S3: method steps

## Claims

1. Measurement device (100, 200, 300, 400) for measuring the screen/case ratio (106, 406) of a display device (150, 250, 450), the measurement device (100, 200, 300, 400) comprising:
a first sensor (101) configured to measure a screen size (103) of a screen (151, 251, 451) of the display device (150, 250, 450),
a second sensor (102) configured to measure a size (104) of the case (152, 252, 452) of the display device (150, 250, 450), and
a control unit (105, 405) configured to calculate the screen/case ratio (106, 406) as a ratio between the measured screen size (103) and the measured size (104) of the case (152, 252, 452).

2. Measurement device (100, 200, 300, 400) according to claim 1, wherein the first sensor (101) is configured to measure the screen size (103) in a plan view onto the display device (150, 250, 450), and wherein the second sensor (102) is configured to measure the size (104) of the case (152, 252, 452) in a plan view onto the display device (150, 250, 450).

3. Measurement device (100, 200, 300, 400) according to any one of the preceding claims, wherein the first sensor (101) comprises a plurality of optical sensor elements (311) that are distributed on a plane and are configured to sense incident light, wherein the first sensor (101) is arranged opposite to the display device (150, 250, 450) such that the plane is parallel to the screen (151, 251, 451) of the display device (150, 250, 450).

4. Measurement device (100, 200, 300, 400) according to claim 3, wherein the optical sensor elements (311) are distributed over an area that is at least as large as the largest display device (150, 250, 450) to be analyzed with the measurement device (100, 200, 300, 400).

5. Measurement device (100, 200, 300, 400) according to any one of claims 3 and 4, wherein the second sensor (102) comprises a plurality of proximity sensors (312).

6. Measurement device (100, 200, 300, 400) according to any one of claims 3 and 4, wherein the second sensor (102) is implemented in the control unit (105, 405) that is configured to identify the screen (151, 251, 451) based on optical sensor elements (311) that indicate a high amount of incident light and to identify the case (152, 252, 452) based on optical sensor elements (311) that indicate a low amount of incident light.

7. Measurement device (100, 200, 300, 400) according to any one of claims 1 and 2, wherein a camera (415) is provided as the first sensor (101) and the second sensor (102), wherein the control unit (105, 405) is configured to determine the screen size (103) of the screen (151, 251, 451) of the display device (150, 250, 450) and the size (104) of the case (152, 252, 452) of the display device (150, 250, 450) using image processing and/or pattern recognition algorithms.

8. Measurement device (100, 200, 300, 400) according to claim 7, wherein the control unit (105, 405) is configured to apply perspective corrections to the images recorded by the camera (415) prior to applying the image processing and/or pattern recognition algorithms.

9. Measurement device (100, 200, 300, 400) according to any one of the preceding claims, comprising a device support that is arranged under the display device (150, 250, 450) and comprises a predetermined color.

10. Measurement device (100, 200, 300, 400) according to any one of the preceding claims, wherein the control unit (105, 405) is coupled to the display device (150, 250, 450) and is configured to control the display device (150, 250, 450) to display a predetermined pattern on the screen (151, 251, 451).

11. Measurement method for measuring the screen/case ratio (106, 406) of a display device (150, 250, 450), the measurement method comprising:
measuring (S1) a screen size (103) of a screen (151, 251, 451) of the display device (150, 250, 450),
measuring (S2) a size (104) of the case (152, 252, 452) of the display device (150, 250, 450), and
calculating (S3) the screen/case ratio (106, 406) as a ratio between the measured screen size (103) and the measured size (104) of the case (152, 252, 452).

12. Measurement method according to claim 11, wherein measuring (S1) the screen size (103) comprises measuring the screen size (103) in a plan view onto the display device (150, 250, 450), and wherein measuring (S2) the size (104) of the case (152, 252, 452) comprises measuring the size (104) of the case (152, 252, 452) in a plan view onto the display device (150, 250, 450); and/or
wherein the method comprises supporting the display device (150, 250, 450) with a device support that comprises a predetermined color; and/or
wherein the method comprises controlling the display device (150, 250, 450) to display a predetermined pattern on the screen (151, 251, 451).

13. Measurement method according to any one of the preceding claims 11 and 12, wherein measuring (S1) the screen size (103) is performed with a plurality of optical sensor elements (311) that are distributed on a plane and are configured to sense incident light, wherein the optical sensor elements (311) are arranged opposite to the display device (150, 250, 450) such that the plane is parallel to the screen (151, 251, 451) of the display device (150, 250, 450), especially wherein the optical sensor elements (311) are distributed over an area that is at least as large as the largest display device (150, 250, 450) to be analyzed with the measurement device (100, 200, 300, 400).

14. Measurement method according to claim 13, wherein measuring (S2) the size (104) of the case (152, 252, 452) is performed with a plurality of proximity sensors (312); or
wherein measuring (S2) the size (104) of the case (152, 252, 452) is performed by identifying the screen (151, 251, 451) based on optical sensor elements (311) that indicate a high amount of incident light and by identifying the case (152, 252, 452) based on optical sensor elements (311) that indicate a low amount of incident light.

15. Measurement method according to any one of claims 11 and 12, wherein measuring (S1) the screen size (103) and measuring the size (104) of the case (152, 252, 452) is performed with a camera (415), wherein the screen size (103) of the screen (151, 251, 451) of the display device (150, 250, 450) and the size (104) of the case (152, 252, 452) of the display device (150, 250, 450) is determined using image processing and/or pattern recognition algorithms, especially wherein perspective corrections are applied to the images recorded by the camera (415) prior to applying the image processing and/or pattern recognition algorithms.
